# EUROPEAN PATENT APPLICATION

(11) **EP 2 557 265 A1**
(43) Date of publication of application: **13.02.2013**
(21) Application number: 11306036.2
(22) Date of filing: 10.08.2011
(51) Int. Cl.: E21B 21/06, E21B 49/08, B01D 19/00

(54) **Device for extracting at least one gas contained in a circulating fluid.**

(71) Applicant: Geoservices Equipements, 95700 Roissy en France (FR)
(72) Inventor: Kimour, Farouk, 75017 PARIS (FR)
(74) Representative: Vandermolen, Mathieu

(57) **Abstract**

The device comprises an apparatus (75) including a sampling sleeve (80) fixed around a sampling opening (53) provided in the duct (25) and a sampling head (81), introduced in the sampling sleeve (80) to be submerged in the circulating fluid, the sampling head (81) defining at least one fluid sampling opening (93).

The device comprises a filtration member (85), having a filtration wall (99) arranged in the vicinity of the sampling opening (93) to filter the fluid introduced through the sampling opening (93), and a mobile member (87) rotatably mounted around an axis (C-C') of rotation relative to the sampling head (81) to ensure at least partial cleaning of the filtration wall (99).

The sampling apparatus (75) comprise a sealing assembly (87A) able to seal the sampling sleeve (80) around the sampling head (81) when the sampling head (81) is inserted in the sampling sleeve (80).

## Description

The present invention concerns a device for extracting at least one gas contained in a circulating fluid, of the type comprising:
- an apparatus for sampling the fluid including:
   * a sampling sleeve intended to be fixed around a sampling opening provided in the duct, the sampling sleeve emerging upstream in an outer opening and being intended to emerge downstream in the duct;
   * a sampling head, introduced in the sampling sleeve to be submerged in the circulating fluid, the sampling head defining at least one fluid sampling opening;
   * a filtration member, having a filtration wall arranged in the vicinity of the sampling opening to filter the fluid introduced through the sampling opening;
   * a mobile member rotatably mounted around an axis of rotation relative to the sampling head to ensure at least partial cleaning of the filtration wall;
- an apparatus for extracting gases contained in the sampled fluid, connected to the sampling apparatus.

This device is used in particular in installations for drilling a well in the ground.

During drilling of an oil well or a well for another effluent (in particular gas, vapor, water), it is known to conduct an analysis of the gaseous components contained in the drilling fluid emerging from the well, this fluid commonly being designated by the term "drilling mud."

This analysis makes it possible to reconstitute the geological succession of the formations passed through during drilling and plays a role in determining the exploitation possibilities for the fluid deposits encountered.

This analysis, done continuously, comprises two main phases. A first phase consists of continuously sampling circulating drilling mud, then bringing it into an extraction enclosure where the gases conveyed by the mud (for example hydrocarbon compounds, carbon dioxide, hydrogen sulfide, helium and nitrogen) are extracted from the mud.

A second phase consists of transporting the extracted gases towards an analyzer, where those gases are qualified and, in certain cases, quantified.

To conduct gas sampling, it is known to submerge a sampling head into a duct of the drilling installation in which the mud extracted from the well circulates.

The sampling head is connected to a pump that conveys the mud by suction, from the sampling point in the mud circulation duct, to the extraction enclosure.

The nature of the sampled fluid makes the sampling of that fluid difficult. Indeed, drilling mud contains dirt, sediment, as well as various rock fragments. The solid content of the mud therefore tends to clog the sampling head, which is detrimental to the reliability of the analysis of the gases.

To offset this problem, the extraction device described in FR 2 646 508 uses a filtering liner mounted on the sampling head to prevent large solid matter from penetrating the sampling head. To prevent clogging of the liner, a rotary scraper continuously cleans the filtering wall defined by the liner.

The scraper is driven in rotation via a cable actuated by the motor of the sampling pump, such that when the pump is activated, the scraping is done automatically.

Such a system is satisfactory concerning cleaning of the filtering wall.

However, to drive the rotation of the scraper, it is necessary to introduce its driving cable, provided with a protective sheath, into the fluid circulation duct, for example at the bleed in which the sampling head is inserted.

The sampling device is therefore not adapted to conditions in which the fluid circulates under pressure in the fluid circulation duct, such as when the well is drilled under managed pressure drilling, usually designated by the acronym "MPD"

One aim of the invention is therefore to have a device for extracting gas present in a circulating fluid, in which the continuous sampling of fluid remains reliable, and that is simple to mount on a drilling installation, in particular when the fluid to be sampled has a pressure greater than the atmospheric pressure.

To that end, the invention concerns a device of the aforementioned type, characterized in that the sampling apparatus comprise a sealing assembly able to seal the sampling sleeve around the sampling head when the sampling head is inserted in the sampling sleeve.

The extraction device according to the invention can comprise one or several of the following features, considered alone or according to all technically possible combinations:
- the sampling sleeve defines an inner cross section complementary to the outer cross section of the sampling head.
- the sealing assembly comprising an outer annular sealing member interposed in the clearance between the sampling sleeve and the sampling head.
- the sampling head delimits a inner volume closed by the filtering member and a driving shaft mounted in the sampling head through the inner volume and through the filtering member, the driving shaft being able to rotate the mobile member around the axis of rotation, the sealing assembly comprising means for injecting a sealing liquid between the driving shaft and a body of the sampling head, to prevent fluid sampled in the inner volume to pass between the driving shaft and the body of the sampling head.
- the sampling head carries a driving motor able to drive the mobile member in rotation around the axis of rotation.
- the mobile member is mounted freely rotating on the sampling head and defines at least one propulsion surface able to interact mechanically with the circulating fluid to drive the mobile member in rotation around the axis of rotation, the mobile member being driven in rotation around the axis of rotation exclusively by the circulating fluid when the sampling apparatus is submerged in the circulating fluid.
- the mobile member comprises a body extending around the axis of rotation and at least one blade radially protruding in relation to the body, the or each blade defining the or each propulsion surface.
- the mobile member is separate from the filtration member, the mobile member carrying at least one member for sweeping the filtrating wall.
- the filtration wall and the sampling head define an inner volume of filtered fluid in which the sampling opening emerges, at least one sweeping member carried by the mobile member being arranged on the filtration wall outside the inner volume.
- the filtration wall and the sampling head define an inner volume of filtered fluid in which the sampling opening emerges, at least one sweeping member carried by the mobile member being arranged in the inner volume.
- the propulsion surface of the mobile member is arranged outside the inner volume, the mobile member comprising at least one connecting member mechanically connecting the or each sweeping member arranged in the inner volume to the propulsion surface.
- the mobile member is formed by a filtration member.

The invention also concerns a fluid exploitation installation characterized in that it comprises:
- a fluid circulation duct ; and
- a device as defined above, the sampling apparatus being at least partially submerged in the fluid circulating in the circulation duct, the sampling sleeve being fixedly mounted on the duct, the sampling head being sealingly mounted in the sampling sleeve with the sealing assembly interposed between the sampling sleeve and the sampling head.

The installation according to the invention can comprise the following feature:
- the circulating fluid contained in the circulation duct has a pressure greater than the pressure reigning outside the circulation duct.

The invention also concerns an extraction method for extracting at least one gas contained in a circulating fluid, characterized in that it comprises the following steps:
- submersion of the sampling apparatus of a device as defined above in the circulating fluid;
- driving in rotation of the mobile member in relation to the sampling head;
- sampling fluid, in particular fluid under pressure, in the sampling head through the filtration member;
- conveying the sampled fluid to the extraction means;
- extracting at least part of the or each gas outside the fluid in the extraction means.

The invention will be better understood upon reading the following description, provided solely as an example, and done in reference to the appended drawings, in which:
- Figure 1 is a diagrammatic vertical cross-sectional view of a drilling installation, provided with a first extraction device according to the invention;
- Figure 2 is a larger scale diagrammatic view of the main elements of the extraction device according to the invention;
- Figure 3 is a cross-sectional view, along a median vertical plane, of the sampling head of the first extraction device;
- Figure 4 is a cross-sectional view along the transverse plane IV-IV of Figure 3;
- Figure 5 is a view similar to Figure 3 of the sampling head of a second extraction device according to the invention;
- Figure 6 is a bottom view of the device of Figure 5;
- Figure 7 is a view similar to Figure 3 of the sampling head of a third extraction device according to the invention;
- Figure 8 is a view, taken in bottom cross-section along the transverse plane VIII-VIII of Figure 7;
- Figure 9 is a side view of a mud circulating duct equipped with a fourth extracting device according to the invention;
- Figure 10 is a transverse cross section view of the duct of Figure 9, taken along the transverse plane X-X;
- Figure 11 is a longitudinal cross section view of the duct of Figure 9, taken along the longitudinal plane XI.

In all of the following, the terms "upstream" and "downstream" are used in reference to the normal circulation direction of a fluid in a duct.

The extraction devices according to the invention are intended to be used for example in a drilling installation of a fluid production well, in particular hydrocarbons, such as an oil well.

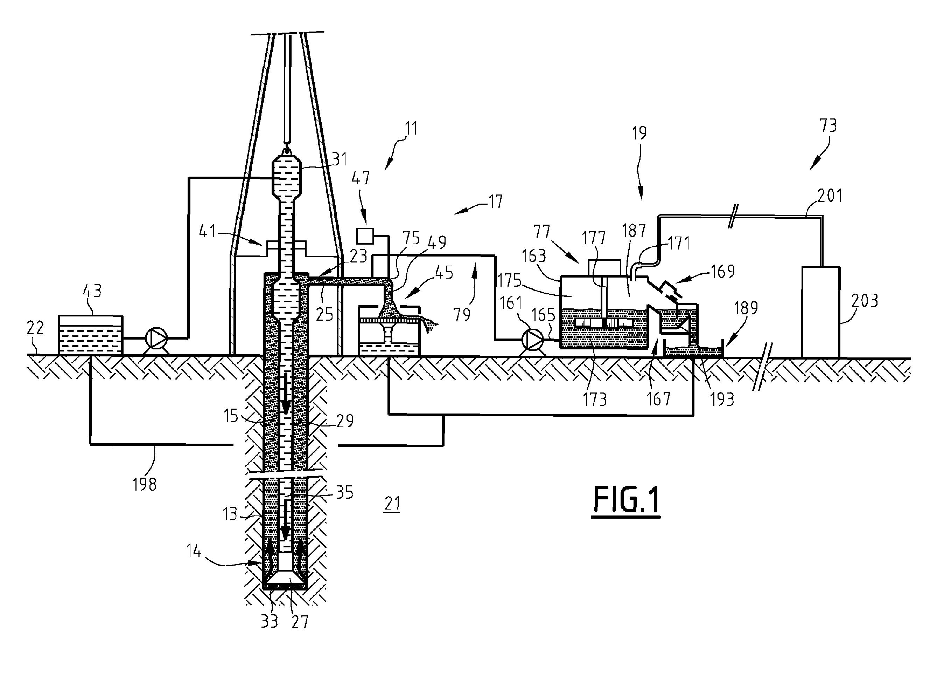

As illustrated in Figure 1, this installation 11 comprises a drilling duct 13 arranged in a cavity 14 pierced with a rotary drilling tool 15, a surface installation 17, and an analysis assembly 19 for the gases contained in the drilling fluid.

The drilling duct 13 is arranged in the cavity 14 pierced in the subsoil 21 by the rotary drilling tool 15. It extends in an upper portion of the height of the cavity 14 it defines. The cavity 14 also has a lower portion directly defined by the subsoil.

The drilling duct 13 includes, at the surface 22, a wellhead 23 provided with a fluid circulation duct 25.

The drilling tool 15 comprises a drilling head 27, a drill string 29, and a head 31 for injecting drilling fluid.

The drilling head 27 comprises means 33 for piercing rocks in the subsoil 21. It is mounted on the lower portion of the drill string 29 and is positioned in the bottom of the cavity 14.

The string 29 comprises a set of hollow drilling tubes. These tubes define an inner space 35 that makes it possible to bring the drilling fluid injected by the head 31 from the surface 22 to the drilling head 27. To that end, the injection head 31 is screwed onto the upper portion of the string 29.

This drilling fluid, commonly designated by the term "drilling mud," is essentially liquid.

The surface installation 17 comprises means 41 for supporting and driving the rotation of the drilling tool 15, means 43 for injecting drilling liquid and a vibrating screen 45.

The injection means 43 is hydraulically connected to the injection head 31 to introduce the drilling fluid and cause it to circulate in the inner space 35 of the drill string 29.

The inner space 35 emerges opposite the drill head 27 so that the drilling fluid lubricates the piercing means 33 and goes up in the cavity 14 along the duct 13 up to the well head 23, evacuating the solid drilling debris collected.

The drilling fluid present in the cavity 14 maintains a hydrostatic pressure in the cavity, which prevents the walls defining the cavity 14 not covered by the duct 13 from breaking and which also prevents the eruptive release of hydrocarbons in the cavity 14.

The circulation duct 25 is hydraulically connected to the cavity 14 through the well head 23 to collect the drilling fluid coming from the cavity 14. It is for example formed by an open neck or by a closed tubular duct.

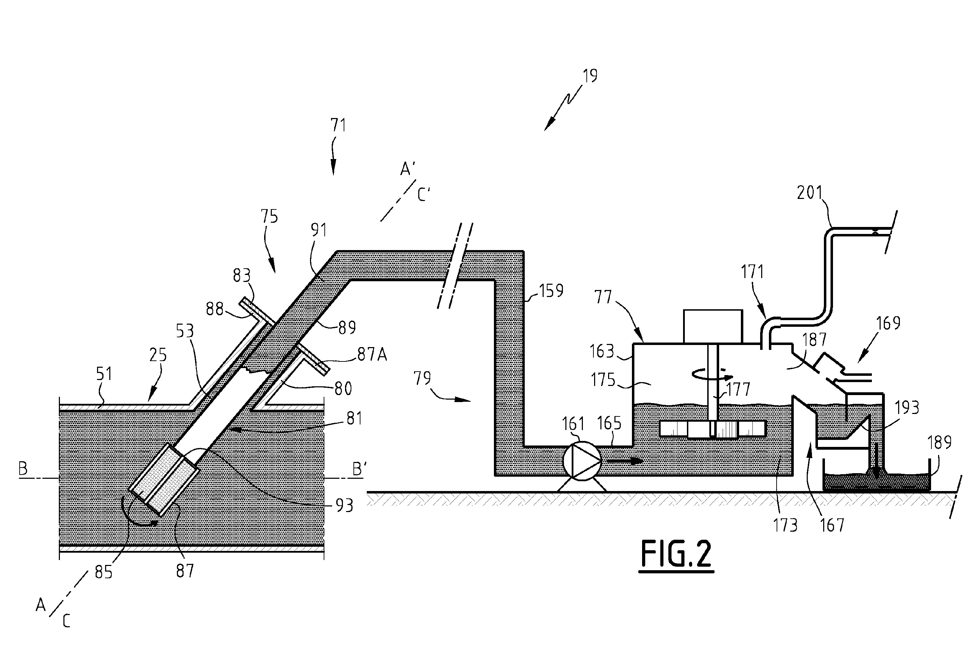

In the example illustrated in Figure 2, the duct 25 is a closed tubular duct. It comprises a main segment 51 for circulation of the fluid and a bleed opening 53 emerging transversally in the main segment 51 to allow the sampling of the fluid.

The vibrating screen 45 collects the fluid charged with drilling residue that comes out of the circulation duct 25 and separates the liquid from the solid drilling residue.

The analysis assembly 19 comprises a device 71 for extracting the gases contained in the drilling fluid, and a device 73 for transporting and analyzing gases extracted from the drilling fluid in the extraction device 71.

The extraction device 71 is arranged in the vicinity of the wellhead 23, in an explosive zone. It comprises an apparatus 75 for continuously sampling drilling fluid circulating in the duct 25, an enclosure 77 for extracting gases outside the fluid sampled by the sampling apparatus 75, and means 79 for conveying the sampled fluid between the sampling apparatus 75 and the extraction enclosure 77.

The sampling apparatus 75 comprises a sampling sleeve 80, fixedly and sealingly mounted on the fluid circulation duct 25, a hollow sampling head 81, mounted protruding in the duct 25, and a flange 83 for mounting the head 81 in the sleeve 80.

The sampling apparatus 75 also includes a member 85 for filtering the sampled flow, mounted at the free end of the head 81 and, in this example, a mobile member 87 for cleaning the filtering member 85, mounted mobile in relation to the head 81 and the filtering member 85. The sampling apparatus further comprise a sealing assembly 87A interposed between the sampling head 81 and the sampling sleeve 80 to prevent the drilling fluid located in the duct 25 from flowing outside of the duct 25 between the sampling head 81 and the sampling sleeve 80.

The sampling sleeve 80 protrudes transversely in relation to said segment 51 around the sampling opening. It is fixed on the main segment 51 of the circulation duct 25 in a sealing manner, e.g. by welding.

The sleeve 80 comprises, at its free end, a skirt 88 for fastening the fluid sampling head 81. The sealing assembly is advantageously disposed between the skirt 88 and the flange 83 to provide a sealing closure of the sleeve 80.

The hollow head 81 is formed by a rigid stick 89 protruding transversely through the sleeve 80 in the main segment 51 of the duct 25. The stick 89 thus has an axis A-A' inclined by a non-zero angle in relation to the local axis B-B' of circulation of the drilling fluid in the central segment 51 at the sleeve 80.

The stick 89 inwardly defines a fluid sampling passage 91 emerging, at its free end arranged in the main segment 51, through an upstream fluid sampling opening 93.

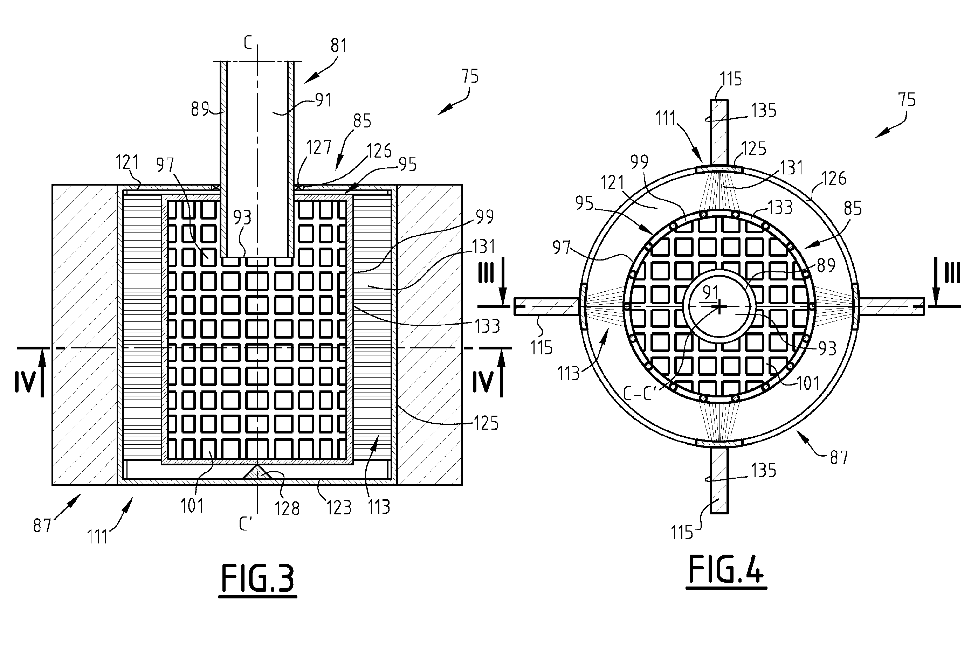

In the example illustrated in Figures 3 and 4, the filtering member 85 is formed by a porous cage 95 defining orifices 97 for passage of the drilling fluid.

In the example illustrated in Figure 3, the cage 95 is formed by a lattice defining the orifices 97. The maximum area of each orifice 97 is for example less than 1 mm² to limit the size of the solids able to penetrate inside the cage 95.

In the example illustrated in Figure 3, the cage 95 is fixedly mounted around the stick 89 in the vicinity of the upstream opening 93. The cage 95 is thus arranged opposite the opening 93.

The cage 95 has a cylindrical shape with axis C-C' coaxial with the local axis A-A' of the stick 89 in the vicinity of the free end 93. The cage 95 defines a peripheral filtration wall 99 extending around the axis C-C'.

Passage orifices 97 extend through the filtration wall 99.

The cage 95 is mounted substantially sealingly on the stick 89 to define, with the stick 89, an interior volume 101 of filtered drilling fluid.

Thus, the filtered drilling fluid present in the interior volume 101, coming from the duct 25, is passed substantially exclusively through the passage orifices 97 of the filtration wall 99 to enter the volume 101.

The interior volume 101 emerges in the sampling passage 91 through the upstream opening 93.

In the first extraction device according to the invention, the mobile member 87 is driven in rotation by the drilling fluid circulating in the duct 25.

The mobile cleaning member 87 extends around the filtration member 85. It comprises a rotary frame 111, members 113 for sweeping the filtration member 85, and a plurality of blades 115 for propelling the mobile member 87 in rotation around the head 81 under the effect of the circulation of the fluid in the circulation duct 25.

The frame 111 is mounted coaxially around the filtration member 85. It comprises an openwork structure defined by an upper plate 121 arranged above the cage 95, a lower plate 123 arranged under the cage 95 and a plurality of support braces 125 spaced angularly in relation to each other around the axis C-C' to define circulation openings 126 for the fluid through the frame 111.

The upper plate 123 extends in a plane substantially perpendicular to the axis C-C' of rotation of the mobile member 87. It is arranged around the stick 89 in the vicinity of the upstream opening 93, above the cage 95. It is connected to the head 81 via an annular bearing 127 arranged in a central opening of the plate 123.

The lower plate 125 extends in a plane substantially perpendicular to the axis C-C' of rotation of the mobile member 87. It comprises a guide slug 128 protruding towards the cage 95 along the axis C-C' of rotation.

The braces 125 extend substantially parallel to the axis C-C'. In the example illustrated in Figure 4, the mobile member 87 comprises four braces 125 angularly distributed around the axis of rotation C-C'.

Each brace 125 connects the lower plate 123 to the upper plate 121. Each brace 125 extends parallel to the filtration wall 99, radially spaced away from said wall 99.

In this example, the sweeping members 113 are formed by brushes 131 protruding radially towards the axis C-C' from each brace 125.

Each brush 131 thus extends inwardly toward the axis C-C' between a connecting edge fastened on the brace 125 and a free edge applied on an outer surface 133 of the filtration wall 99.

The height of the brushes 131, along the axis C-C', is substantially equal to the height of the filtration wall 99.

The blades 115 extend radially outwardly from the braces 125. In the example illustrated in Figure 4, the blades 115 are substantially planar and extend in a vertical plane passing through the axis C-C'. Alternatively, the blades are curved.

Each blade 115 has a propulsion surface 135 able to extend transversely in relation to the axis B-B' of the fluid flow circulating in the segment 51 for at least one given angular position of the blade 115 around the axis C-C' when the sampling apparatus 75 is arranged in the duct 25.

The mobile member 87 is mounted freely rotating around the head 81 via the annular bearing 127.

Thus, the frame 111, the sweeping members 113 and the blades 115 can be moved in joint rotation around the axis C-C' in relation to the head 81 and the filtration member 85.

According to the invention, when the sampling apparatus 75 is placed in the fluid circulating in the duct 25, the mobile member 87 is driven in rotation around the axis C-C' exclusively via the fluid circulating in the duct 25, which mechanically interacts on the propulsion surface 135 of the blades 115.

No external means for driving the mobile member 87 in rotation is provided, which considerably simplifies the mounting of the sampling apparatus 75 on the duct 25.

During the rotation of the mobile member 87, the brushes 131 continuously sweep the outer surface 133 while moving around it over at least one circumference around the axis C-C'.

The conveying means 79 comprise a connecting tubing 159 and a pump 161.

The tubing 159 connects the sampling head 81 to the inlet of the pump 61. It emerges upstream in the fluid sampling passage 91.

The pump 161 is for example a peristaltic pump, able to convey the sampled drilling fluid, after passage in the filtration member 87, towards the enclosure 77, at an adjustable flow rate.

In the example illustrated in Figures 1 and 2, the enclosure 77 comprises a container 163, a duct 165 for bringing mud into the container 163, a duct 167 for discharging mud outside the container 163, a means 169 for introducing a vector gas into the container 163, and an outlet 171 for extracting extracted gases.

The container 163 has an inner volume for example between 0.4 liters and 3 liters. This container 163 comprises a lower portion 173 in which the drilling fluid coming from the sampling apparatus 75 circulates and an upper portion 175 that has a vapor space.

In this example, the container 163 is provided with a rotary mixing unit 177 that protrudes in the inner volume to be submerged in and agitates the fluid when it rotates.

The mud intake duct 165 extends between the outlet of the pump 161 and the lower portion 173 of the container 163. This intake duct 165 can be provided with a means for heating the fluid (not shown), in order to bring the temperature of the fluid to values between 25 °C and 120 °C, preferably between 60 °C and 90 °C.

The evacuation duct 167 extends between an overflow passage 187, formed in the upper portion 175 of the container 163, and a retention tank 189 designed to receive the fluid evacuated outside the extraction device 71.

The evacuation duct 167 is advantageously bent to form a siphon 193 emerging opposite the tank 89 above the level of the liquid contained in said tank.

The fluid introduced into the container 163 via the intake duct 165 is evacuated by overflow into the evacuation duct 167 through the overflow passage 187. Part of the evacuated fluid temporarily resides in the siphon 193 of the evacuation duct 167, which prevents gas from entering the upper portion 175 of the container 163 via the evacuation duct 167.

Gas is therefore introduced into the container 163 solely via the means 169 for introducing the vector gas.

The fluid collected in the retention tank 89 is recycled towards the injection means 43 by a recirculation duct 198.

In the example illustrated by Figures 1 and 2, the vector gas introduced by the introduction means 69 is formed by the air around the installation, at atmospheric pressure. Alternatively, this vector gas is another gas such as nitrogen or helium.

The transport and analysis device 73 comprises a line 201 for transporting extracted gases and an analyzer 203 for qualifying and quantifying the gases extracted from the fluid.

The transport line 201 connects the container 163, arranged in the vicinity of the wellhead 23, in an explosive zone, to the analyzer 203 arranged, away from the wellhead 23, in a non-explosive zone, for example a pressurized cabin.

The transport line 201 is advantageously made with a base of a metal or polymer material, in particular polyethylene and/or polytetrafluoroethylene (PTFE). The line 201 for example has a length varying between 10 meters and 500 meters.

The analyzer 203 comprises suction means (not shown) for conveying the gases extracted outside the enclosure 77 through the transport line 201 and an instrumentation (not shown) that enables the detection and quantification of one or several extracted gases coming from the transport line 201.

This instrumentation for example comprises infrared detection devices for quantifying carbon dioxide, chromatographs (flame ionization detectors, FID) for detecting hydrocarbons, or TCD (Thermal Conductivity Detectors) depending on the gases to be analyzed.

It can also comprise a chromatography and gas system coupled to a mass spectrograph, this system being designated by the abbreviation "GC-MS." It can also comprise an isotopic analysis device, as described in application EP 1 887 343 by the Applicant.

The simultaneous detection and quantification of a plurality of gases is therefore possible.

The operation of the analysis assembly 19, during drilling of a well via the installation 11, will now be described as an example, in reference to Figure 1.

To perform the drilling, the drilling tool 15 is driven in rotation by the surface installation 41. The drilling fluid is introduced into the inner space 35 of the drill string 29 by the injection means 43. This fluid descends to the drilling head 27, and passes into the drilling duct 13 through the drilling head 27. This fluid cools and lubricates the drilling means 33. The fluid collects the solid cuttings resulting from the drilling and goes back up through the annular space defined between the drill string 29 and the walls of the drilling duct 13, then is evacuated through the circulation duct 25.

When an analysis of the gases present in the drilling fluid circulating in the duct 25 must be done, the sampling head 81 is mounted protruding in the duct 25 while being introduced through the sampling sleeve 80.

The connecting flange 83 is then sealably fastened on the sleeve 80 by means of the sealing assembly 87A.

In this configuration, the head 81, the filtering member 85, and the mobile cleaning member 87 are submerged in the main segment 51 of the duct 25 with the axis C-C' of rotation of the mobile member 87 extending transversely in relation to the axis B-B' of circulation of the fluid in the main segment 51.

The fluid circulating in the main segment 51 then interacts with the propulsion surfaces 135 of the blades 115 to spontaneously drive the mobile member 87 in rotation around the filtration member 85, without it being necessary to use an external means for driving the rotation.

This rotation of the mobile member 87 causes the joint rotation of the frame 111 and the sweeping members 113. The brushes 131 then move against the outer surface 133 of the filtration wall 99, thereby continuously cleaning that surface 133.

The clogging of the passage orifices 97 by solid particles is therefore decreased or prevented, which considerably improves the reliability of the sampling.

In reference to Figure 2, the pump 161 is then activated, in order to continuously sample a determined fraction of the drilling fluid coming from the duct 25 and present in the volume 101.

When the pump 161 is activated, the fluid present in the duct 25 outside the filtering member 85 penetrates the interior volume 101 through the orifices 97. The filtered fluid present in the volume 101 is then pumped through the interior passage 91 of the head 81 up to the inlet for introducing the pump 161 through the tubing 159.

Then, the sampled flow is introduced up to the container 163 via the intake duct 165. It penetrates the lower portion 173 of said container 163.

The mixing unit 177 is then driven in rotation at a high speed to agitate the fluid in the lower portion 173 of the container 163. This causes the extraction of the gases contained in the fluid, as well as the mixture of the gases extracted from the fluid with the vector gas introduced by the introduction means 169.

The gaseous mixture is extracted through the extraction opening 171, then is conveyed in the transport line 201 under the effect of the suction means. It then reaches the analyzer 203, where it is qualified and quantified by the instrumentation.

The mud is then evacuated by overflowing through the mud evacuation duct 167 up to the retention tank 189.

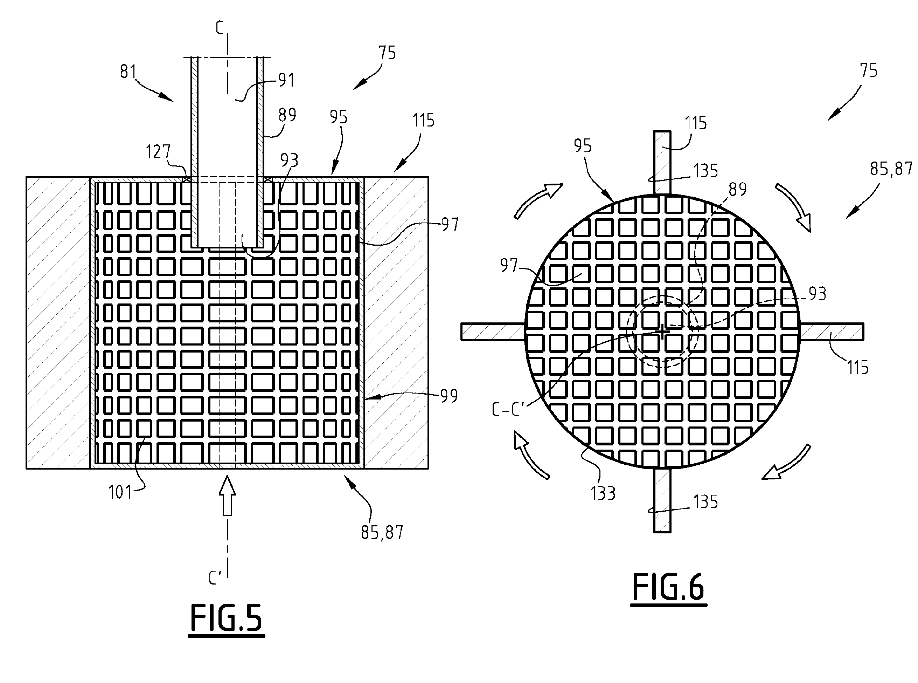

A second extraction device 71 according to the invention is illustrated in Figures 5 and 6. Unlike the first extraction device illustrated in Figures 3 and 4, the member 87 that is mobile in relation to the head 81 is formed by the filtration member 85 itself.

To that end, the porous cage 95 is mounted mobile in rotation around the end of the stick 89 in the vicinity of the upstream opening 93.

The annular bearing 127 is then inserted between an upper wall of the cage 95 and the outer surface of the stick 89.

In this embodiment, the blades 115 for driving the member 85, 87 in rotation protrude radially from the outer surface 133 of the cage 95. They are mounted secured to the cage 95 to be driven in rotation jointly with the cage 95 around the axis C-C'.

The member 85, 87 then lacks a sweeping member 113. The cleaning of the filtration wall 99 is done by the continuous rotation of the filtration member 85 87 around the head 81.

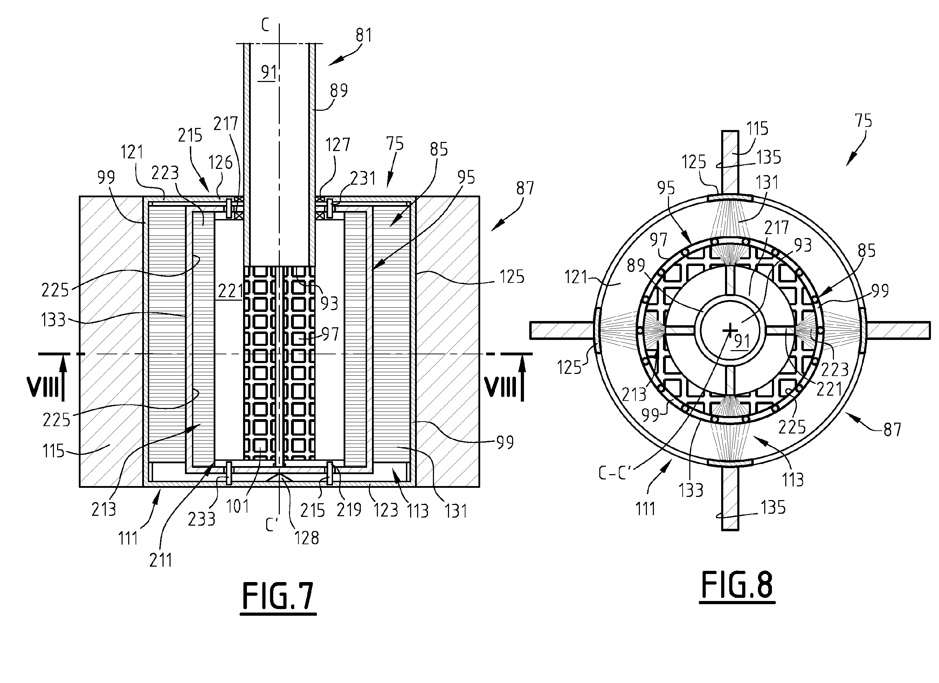

A third extraction device 71 according to the invention is illustrated in Figures 7 and 8. Unlike the first extraction device according to the invention, this device also comprises a secondary frame 211 and a plurality of secondary sweeping members 213, the frame 211 and the members 213 being arranged in the inner volume 101 of the filtration member 85.

This device also comprises connecting members 215 between the outer frame 111 I of the mobile member 87 and the secondary frame 211.

As illustrated in Figure 7, the secondary frame 211 comprises an upper plate 217 arranged under the upper plate 121 of the frame 111, with insertion of an upper wall of the cage 95, and a lower plate 219 arranged in the inner volume 101 opposite the lower plate 123 of the frame 111, with insertion of a lower wall of the cage 95 around the axis C-C'.

The secondary frame 211 also comprises a plurality of brush supports 221 extending parallel to the axis C-C' in the inner volume 101 between the upper plate 217 and the lower plate 219.

The secondary sweeping members 213 comprise brushes 223. Each brush 223 extends outwardly spaced apart from the axis C-C' between an edge fastened on a brush support 221, and a free edge arranged bearing against an inner surface 225 of the filtration wall 99.

The brush supports 221 define circulation openings between them for the filtered fluid.

The cage 95 defines an upper annular passage opening for the connecting members 215, formed in its upper wall, and a lower annular passage opening for the connecting members 215 formed in its lower wall.

The members 215 comprise at least one upper connecting arm 231 connecting the upper plate 121 of the frame 111 to the upper plate 217 of the secondary frame 211, so as to be secured in rotation, through the upper opening. The members 215 comprise at least one lower connecting arm 233 connecting the lower plate 123 of the main frame 111 to the lower plate 219 of the secondary frame 211 so as to be secured in rotation.

Thus, the secondary frame 211 and the main frame 111 can be jointly moved in rotation around the axis C-C' during the rotation of the mobile member 87.

Thus, the secondary brushes 223 are mobile in rotation jointly with the secondary frame 211 to sweep the inner surface 225 of the filtration wall 99 situated in the inner volume 101, over at least one circumference around the axis C-C' during the rotation of the mobile member 87 under the effect of the flow of fluid interacting with the blades 115.

In one alternative, shown in dotted lines in Figure 1, the drilling installation 11 is provided with a device 47 for regulating the pressure of the drilling fluid in the duct 14 and in the circulation duct 25.

This device 47 comprises a regulated valve 49 placed in the main segment 51, downstream of the sampling sleeve 80.

The sleeve 80 is sealingly closed by the sampling apparatus 75, by sealed fastening of the flange 83 on the skirt 88. The fluid present in the segment 51 then has a pressure greater than the pressure reigning outside the duct 25.

Owing to the invention just described, it is possible to have a particularly reliable extraction device, in which the continuous sampling of a drilling fluid is done while greatly decreasing the risk of clogging of the sampling apparatus 75.

The cleaning of the filtration member 85 is obtained simply, through rotation of the mobile member 87, which is driven exclusively by the liquid fluid circulating around said member 87, without it being necessary to provide an external means for driving the rotation of the mobile member 87. The connection of the extraction device 71 on a fluid circulation duct 25 is therefore particularly easy to do. This is very advantageous, in particular when the fluid present in the duct 25 is at a pressure greater than the atmospheric pressure.

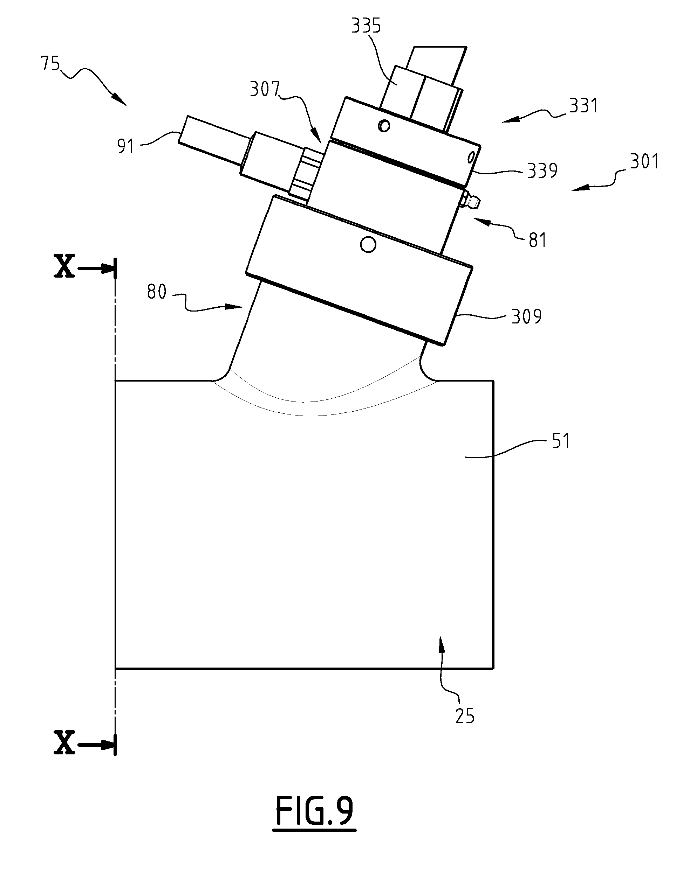

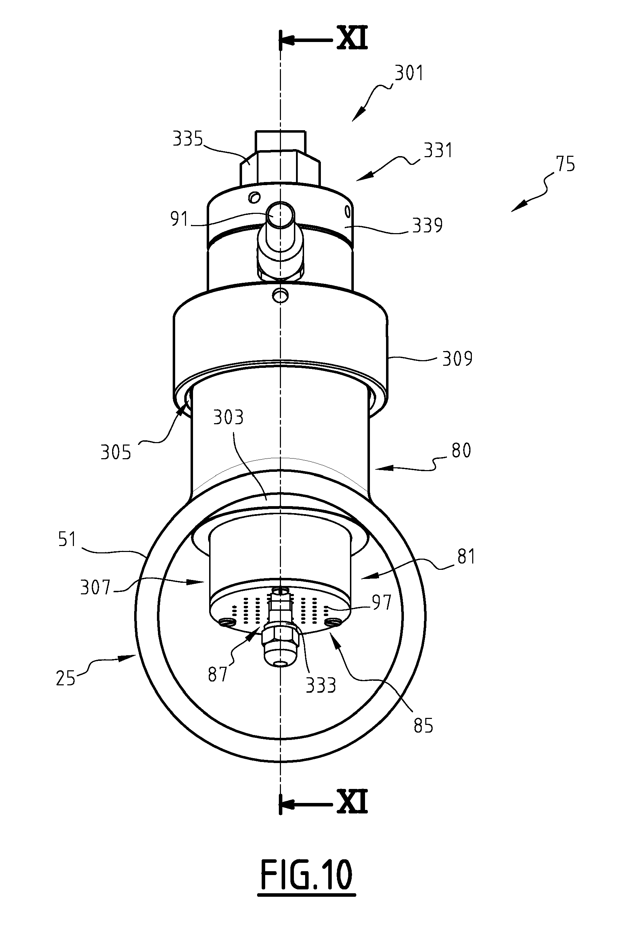

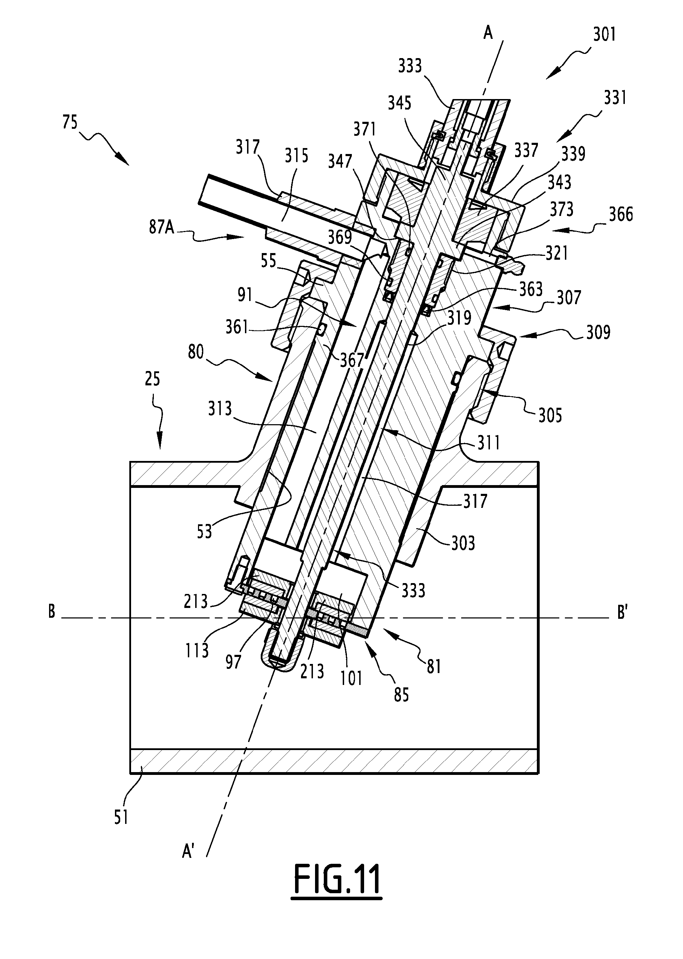

A fourth extraction device 301 according to the invention is illustrated in Figures 9 to 11.

In this example, the sampling sleeve 80 has a substantially cylindrical shape with an axis A-A' which is advantageously inclined with regards to a perpendicular axis to the main axis B-B' of the duct. The sleeve 80 has a lower portion 303 which protrudes in the duct 25.

The sleeve 80 delimits, on its outer peripheral surface outside of the duct 25, fixing means 305 for retaining the sampling head 81. In this example, the fixing means 305 comprise an outer thread which allows the sampling head 81 to be releasably screwed around the sleeve 80 as described below.

The hollow head 81 comprises a substantially cylindrical body 307 at least partially inserted in the sampling sleeve 80, a retaining flange 83, protruding radially from the body 307 and a retaining cap 309 for fixing the head on the fixing means 305.

The body 307 defines an interior sampling volume 101 which opens in its lower end through lower opening 93. The body 307 also delimits an inner fluid sampling passage 91 emerging in the sampling volume 101, and a central passage 311 for receiving means for driving the mobile member 87 in rotation around axis A-A'.

The sampling volume 101 is closed downwardly by the filtering member 85 delimiting the orifices 97. As disclosed above, the mud sampled in the duct 25 has to pass through the orifices 97 to enter the sampling volume 101.

The filtering member 85 is fixed on a lower face of the body 307. It is made of a filtering plate pierced with the orifices 97.

The mobile member 87 has an outer sweeping member 113 applied on the outer face of the filtering member 85 outside of the inner volume 101 and advantageously an inner sweeping member 213 applied on the inner face of the filtering member 85 inside the inner volume 101.

The fluid sampling passage 91 has a first lower section 313 which extends substantially parallel to axis A-A' and a second upper section 315 which protrudes transversally to axis A-A' in an outer duct 315 connected to the extraction enclosure 77.

The central passage 311 extends coaxially or parallel to axis A-A'. It comprises a lower region 317 which opens in the inner region 101, an intermediate guiding region 319 of lower cross section than the lower region 317, and an upper region 321 of higher cross section than the intermediate region 319 and than the lower region 317.

The upper region 321 emerges outwardly at the upper end of the body 307.

In a cross section defined in at least a plane perpendicular to axis A-A', the body 307 has an outer contour which is substantially conjugate to the inner contour of the sleeve 80. Advantageously, the lower part of the body 307 which is inserted in the sleeve 80 has an outer contour conjugate to the inner contour of the sleeve taken in substantially all planes perpendicular to axis A-A'.

The cap 309 is fixed on the fixing means 305. It is applied on the flange 83 to maintain the flange 83 in contact with an upper surface of the sleeve 80, which, in this example is defined on the upper edge of the sleeve 80.

In this example, contrary to the devices shown in Figures 1 to 8, the sampling apparatus 75 comprise external driving means 331 for the mobile member 87, which can be driven independently of the drilling fluid circulating in the duct 25.

The driving means 331 comprise a driving shaft 333, rotatably mounted in the central passage 311 around axis A-A', and a driving assembly 335 for driving the rotating shaft 333 in rotation around axis A-A'.

In this particular example, the driving means 331 further comprise a stop bearing 337 and an upper retaining cap 339.

The driving shaft 333 has a lower supporting part 341, an intermediate collar 343, and an upper transmission part 345.

The lower part 341 extends downwardly through the guiding region 319 and through the lower region 317 of the passage 311. It protrudes out in the inner region 101 and outside of the inner region 101 through the filtering member 85.

The sweeping members 113, 213 of the mobile member 87 are fixed on the lower part 341 to be driven in rotation by the lower part 341.

In the guiding region 319, the lower part 341 has an outer cross section which is complementary to the inner cross section of the guiding region 319.

The collar 343 protrudes radially from the lower part 341. It lies on an annular shoulder 347 defined by the body 307 in the upper region 321 in order to be blocked in downward translation along axis A-A'.

The bearing 339 is mounted around the upper part 345. It sits on the collar 343 to block it in upwards translation along axis A-A'. The bearing 339 is for example a conical stop bearing.

The upper cap 339 is releasably fixed around the upper edge of the body 307. It pushes the bearing 337 and the collar 343 against the retaining shoulder 347.

The driving assembly 335 comprises at least a motor (not shown) and transmission means 351 connected to the upper transmission part 345.

The driving assembly 335 is for example similar to the assembly disclosed in FR 2 646 508 with a motor common with the motor driving the mud pump 161 and transmission means formed of a Bowden cable.

Alternatively, the motor is directly mounted on the top of the sampling head 81. It is in particular independent of the motor driving the mud pump 161. In that case, the motor is advantageously a hydraulic motor.

When the motor is actuated, the transmission means rotate, and the shaft 333, along with the sweeping members 113, 213, are driven in rotation around axis A-A' by the transmission means.

The sealing assembly 87A of the fourth extraction device 301 comprises an upstream sealing outer member 361, an intermediate rotative sealing member 363, and advantageously an upper sealing ring 365.

In an advantageous embodiment, the sealing assembly also comprises a hydraulic sealing system 366.

The upstream sealing member 361 is composed of an annular sealing gasket interposed in the annular clearance between the outer surface of the body 307 and the inner surface of the sleeve 80. It is in particular received in an annular groove 367 to protrude radially out of the groove 367.

The rotative sealing member 363 is formed of a lip seal which surrounds the shaft 333 in the lower part 341. It lies on a shoulder defined between the upper region 321 and the intermediate region 319.

The upper ring member 365 also surrounds the shaft 333. It is locked between the rotative sealing member 363 and the intermediate collar 343.

The upper ring member 365 carries an outer annular gasket 369 sealingly applied on the body 307 and an inner annular gasket 371 sealingly applied on the shaft 333.

The hydraulic sealing system comprises a sealing fluid supplying duct 373 which is connected to a sealing fluid source (not shown). The duct 373 emerges in the central passage 311, in particular in register with the intermediate collar.

The source is able to deliver a sealing fluid, e.g. an oil-based fluid such as grease, to the duct 373 in order to impregnate the intermediate space defined between the shaft and the body 307 downstream of the intermediate region 319.

The operation of the fourth device 301 according to the invention is similar to the operation of the first device 71.

However, the driving assembly 335 is actuated independently of the flow of drilling fluid circulating in the duct 25. The driving assembly 335 drives the shaft 333 in rotation around axis A-A', which leads to the rotation of the mobile member 87 on the surface of the filtering member 85.

Hence, the solid particles and coagulate are scraped off the surfaces of the filtering member 85, which keeps the orifices 97 clear.

Additionally, thanks to the sealing provided by the sealing assembly 87A, the mud is extracted through the orifices 97, in the inner volume 101, and through the sampling passage 91 without leaking into the intermediate space between the shaft 333 and the body 307 above the intermediate region 319.

The drilling fluid is also confined in the intermediate space between the body 307 and the sleeve 80 without leaking out of the sleeve 80.

It is therefore possible to let drilling fluid under pressure flow in the duct 25, in particular when conducting a drilling under managed pressure.

The sampling head 81 can also be easily disconnected from the sleeve 100 when necessary, in particular for cleaning it at regular intervals.

In a variation, the mobile member 87 is freely rotatable around axis A-A', as disclosed above for the first extracting device 75. The shaft 333 is then mounted to be freely rotatable around axis A-A' in the central passage 311. The device 301 does not comprise driving means 331.

## Claims

1. A device (71; 301) for extracting at least one gas contained in a fluid circulating in a duct (25), of the type comprising:
- an apparatus (75) for sampling the fluid including:
* a sampling sleeve (80) intended to be fixed around a sampling opening (53) provided in the duct (25), the sampling sleeve (85) emerging upstream in an outer opening and being intended to emerge downstream in the duct (25);
* a sampling head (81), introduced in the sampling sleeve (80) to be submerged in the circulating fluid, the sampling head (81) defining at least one fluid sampling opening (93);
* a filtration member (85), having a filtration wall (99) arranged in the vicinity of the sampling opening (93) to filter the fluid introduced through the sampling opening (93);
* a mobile member (87) rotatably mounted around an axis (C-C') of rotation relative to the sampling head (81) to ensure at least partial cleaning of the filtration wall (99);
- an apparatus (77) for extracting gases contained in the sampled fluid, connected to the sampling apparatus (75),
**characterized in that** the sampling apparatus (75) comprise a sealing assembly (87A) able to seal the sampling sleeve (80) around the sampling head (81) when the sampling head (81) is inserted in the sampling sleeve (80).

2. A device (301) according to claim 1 **characterized in that** the sampling sleeve (80) defines an inner cross section complementary to the outer cross section of the sampling head (81).

3. A device (301) according to claim 1 or 2, **characterized in that** the sealing assembly (87A) comprising an outer annular sealing member (361) interposed in the clearance between the sampling sleeve (80) and the sampling head (81).

4. A device (301) according to any of the preceding claims, **characterized in that** the sampling head (81) delimits a inner volume (101) closed by the filtering member (85) and a driving shaft (333) mounted in the sampling head (81) through the inner volume (101) and through the filtering member (85), the driving shaft (333) being able to rotate the mobile member (87) around the axis of rotation, the sealing assembly (87A) comprising means (366) for injecting a sealing liquid between the driving shaft (333) and a body (307) of the sampling head (81), to prevent fluid sampled in the inner volume (101) to pass between the driving shaft (333) and the body (307) of the sampling head (81).

5. A device (301) according to any one of claims 1 to 4, **characterized in that** the sampling head (81) carries a driving motor able to drive the mobile member (87) in rotation around the axis of rotation (C-C').

6. A device (71) according to any one of claims 1 to 4, **characterized in that** the mobile member (87) is mounted freely rotating on the sampling head (75) and defines at least one propulsion surface (135) able to interact mechanically with the circulating fluid to drive the mobile member (87) in rotation around the axis of rotation (C-C'), the mobile member (87) being driven in rotation around the axis of rotation (C-C') exclusively by the circulating fluid when the sampling apparatus (75) is submerged in the circulating fluid.

7. The device (71) according to claim 6, **characterized in that** the mobile member comprises a body (111; 95) extending around the axis of rotation (C-C') and at least one blade (115) radially protruding in relation to the body (111; 95), the or each blade (115) defining the or each propulsion surface (135).

8. The device (71) according to claim 6 or 7, **characterized in that** the mobile member (97) is separate from the filtration member (85), the mobile member (87) carrying at least one member (113) for sweeping the filtrating wall (99).

9. The device (71) according to claim 8, **characterized in that** the filtration wall (99) and the sampling head (81) define an inner volume (101) of filtered fluid in which the sampling opening (93) emerges, at least one sweeping member (113) carried by the mobile member (87) being arranged on the filtration wall (99) outside the inner volume (101).

10. The device (71) according to any one of claims 8 or 9, **characterized in that** the filtration wall (99) and the sampling head (81) define an inner volume (101) of filtered fluid in which the sampling opening (93) emerges, at least one sweeping member (213) carried by the mobile member (87) being arranged in the inner volume (101).

11. The device (71) according to claim 10, **characterized in that** the propulsion surface (135) of the mobile member (87) is arranged outside the inner volume (101), the mobile member (87) comprising at least one connecting member (215) mechanically connecting the or each sweeping member (213) arranged in the inner volume (101) to the propulsion surface (135).

12. The device according to one of claims 6 or 7, **characterized in that** the mobile member (87) is formed by a filtration member (85).

13. An installation (11) for exploiting a fluid, **characterized in that** it comprises:
- a fluid circulation duct (25); and
- a device (71; 301) according to any one of the preceding claims, the sampling apparatus (75) being at least partially submerged in the fluid circulating in the circulation duct (25), the sampling sleeve (80) being fixedly mounted on the duct (25), the sampling head (81) being sealingly mounted in the sampling sleeve (81) with the sealing assembly (87A) interposed between the sampling sleeve (80) and the sampling head (81).

14. The installation (11) according to claim 13, **characterized in that** the circulating fluid contained in the circulation duct (25) has a pressure greater than the pressure reigning outside the circulation duct (25).

15. A method for extracting at least one gas contained in a circulating fluid, **characterized in that** it comprises the following steps:
- submersion of the sampling apparatus (75) of a device (71) according to any one of claims 1 to 12 in the circulating fluid;
- driving in rotation of the mobile member (87) in relation to the sampling head (81);
- sampling fluid, in particular fluid under pressure, in the sampling head (81) through the filtration member (85);
- conveying the sampled fluid to the extraction means (77);
- extracting at least part of the or each gas outside the fluid in the extraction means (77).
